# EUROPEAN PATENT APPLICATION

(11) **EP 3 855 018 A1**
(43) Date of publication of application: **28.07.2021**
(21) Application number: 20153137.3
(22) Date of filing: 22.01.2020
(51) Int. Cl.: F03D 17/00, F03D 7/04

(54) **A METHOD FOR COMPUTER-IMPLEMENTED MONITORING OF A WIND TURBINE**

(71) Applicant: Siemens Gamesa Renewable Energy A/S, 7330 Brande (DK)
(72) Inventor: Gollnick, Bert, 22145 Hamburg (DE); Navarro Víllora, Francisco, 20357 Hamburg (DE)
(74) Representative: Aspacher, Karl-Georg

(57) **Abstract**

The invention refers to a method for computer-implemented monitoring of a wind turbine (1) comprising a tower (2) and a nacelle (3) which is arranged on top of the tower (2), where an electric generator (4) is disposed within the nacelle (3) and a rotor (5) having several rotor blades (6) is connected to the nacelle (3). The method comprises the following steps which are carried out for a corresponding operation time point (t):
a) acquiring respective values of one or more operation variables (AA, RS, ..., EM) of the wind turbine (1) at the corresponding operation time point (t);
b) determining the value of a tower clearance (TC) resulting from the acquired value or values of the one or more operation variables (AA, RS, ..., EM) with the aid of a trained data driven model (NN), where the value of an output variable (OV) which is the tower clearance (TC) or a variable correlated with the tower clearance (TC) is predicted by feeding the acquired value of each operation variable (AA, RS, ..., EM) as a digital input (IN) to the trained data driven model (NN) which outputs the predicted value of the output variable (OV) as a digital output, the tower clearance (TC) being shortest the distance between the tower (2) and the tip of a specific rotor blade (6) from said several rotor blades (6) when the specific rotor blade (6) is in its lowermost position in which it points downward in the vertical direction.

## Description

The invention refers to a method and an apparatus for computer-implemented monitoring of a wind turbine.

Specific wind conditions acting on a wind turbine cause high loads at the rotor blades of the turbine rotor. This will result in a bending of the rotor blades bearing the risk that, when passing the tower, the tips of the rotor blades collide with the tower. This will cause a structural damage of the rotor blades and/or the tower and/or the complete turbine, which shall be avoided at all operating conditions of the wind turbine. In other words, it needs to be ensured that the so-called tower clearance between the rotor and the tower will not become zero, where the tower clearance refers to the shortest distance between the tip of the respective rotor blade in its lowermost position and the surface of the tower.

Several solutions have been proposed to avoid blade collisions with the wind turbine tower. Document US 7,246,911 B2 discloses a wind turbine with a sensor that measures the out-of-plane deflection of the blades as well as of a controller that uses the signal from the sensor to determine the risk of a tower strike.

Document EP 2 864 632 B1 discloses a radar sensor mounted on the tower of a wind turbine in order to determine the velocity of the rotor blades in a direction towards and away from the tower.

Document EP 2 635 806 B1 discloses different kinds of sensors installed in the rotor blades and the tower of a wind turbine in order to sense the blade in tower bending. It is determined based on those sensor data whether the distance between the blades and the tower will be below a predetermined minimum value.

The prior art methods for determining the tower clearance of a wind turbine are based on signals of special sensors which need to be installed at the wind turbine for the purpose to detect the tower clearance.

It is an object of the invention to provide a method for computer-implemented monitoring of a wind turbine without the need to install special sensors for detecting the tower clearance.

This object is solved by the independent patent claims. Preferred embodiments of the invention are defined in the dependent claims.

The invention provides a method for computer-implemented monitoring of a wind turbine comprising a tower which extends in a vertical direction and a nacelle which is arranged on top of the tower. The vertical direction refers to the direction perpendicular to the earth's ground at the location of the wind turbine. A nacelle is arranged on top of the tower where an electric generator is disposed within the nacelle and a rotor having several rotor blades is connected to the nacelle at a rotor hub, the rotor being configured to be rotated by wind around a rotor axis. The mechanical energy of the rotation of the rotor is converted into electric energy by the electric generator. The method comprises the following steps a) and b) which are carried out for a corresponding operation time point of a number of operation time points (i.e. at least one operation time point) of the wind turbine. Preferably, steps a) and b) are repeated at regular time intervals during the operation of the wind turbine.

In step a), respective values of one or more operation variables of the wind turbine at the corresponding operation time point are acquired based on sensor data recorded for the wind turbine. In other words, one or more sensors are installed on the wind turbine measuring data corresponding to the respective operation variables and/or measuring data from which the corresponding operation variables are derived. As a result of step a), a value of each operation variable of the one or more operation variables is obtained. In case of only one operation variable, only one value is acquired in step a).

In step b), the value of a tower clearance resulting from the acquired value or values of the one or more operation variables is determined with the aid of a trained data driven model. To do so, the value of an output variable which is the tower clearance or a variable correlated with the tower clearance is predicted by feeding the acquired value of each operation variable as a digital input to the trained data driven model which outputs the predicted value of the output variable. The data driven model is trained (i.e. has been trained beforehand) by training data sets, each training data set comprising a value of the output variable for values of the one or more operation variables.

The tower clearance as mentioned above refers to the shortest distance between the tower and the tip of a specific rotor blade from said several rotor blades when the specific rotor blade is in its lowermost position in which it points downward in the vertical direction. In other words, for the acquired values of the one or more operation variables at the corresponding operation time point, the tower clearance resulting therefrom for a specific one of the rotor blades is obtained by the above described data driven model. At the corresponding operation point, the specific rotor blade needs not be at its lowermost position. Nevertheless, it is possible to determine which tower clearance will occur for the specific rotor blade when it reaches its lowermost position.

The invention has the advantage that the tower clearance of a wind turbine is monitored without installing dedicated sensors for measuring the tower clearance at the wind turbine.

Instead, a neural network trained by suitable training data will provide the value of the tower clearance.

The output variable predicted by the neural network does not need to directly refer to the tower clearance. Typically, the blade tip deflection of the rotor blades is simulated, and the tower clearance is derived from it. In one variant of the invention, the output variable is the blade tip deflection of the specific rotor blade at the corresponding operation time point, where the tower clearance is derived in step b) from the blade tip deflection. The derivation of the tower clearance from this blade tip deflection is straightforward for a skilled person based on construction parameters of the wind turbine. Hence, this derivation will not be described in detail herein.

In a particularly preferred embodiment, the one or more operation variables include one or more bending moments of the specific rotor blade of the rotor. This embodiment is based on the finding that those bending moments have a high influence on the tower clearance.

In a particularly preferred variant of the above embodiment, the one or more bending moments include a flapwise bending moment of the specific rotor blade at its root attached to the rotor hub or at a predetermined distance from its root and/or an edgewise bending moment of the specific rotor blade at its root attached to the rotor hub or at a predetermined distance from its root. The flapwise bending moment is the bending moment in the direction of the rotor axis whereas the edgewise bending moment is the bending moment within the plane of rotation of the rotor blade.

In a particularly preferred embodiment, besides the above one or more bending moments, the one or more operation variables additionally include one or more of the following variables:
- the azimuth angle describing the angular position of the specific rotor blade around the rotor axis;
- the rotational speed of the rotor;
- the electric power produced by the wind turbine;
- the pitch angle of the specific rotor blade describing the angle in which the specific rotor blade is attached to the rotor hub;
- the wind speed at the rotor hub in one or more directions, particularly the wind speed along the rotor axis and/or the wind speed along at least one axis perpendicular to the rotor axis;
- the nacelle acceleration in one or more directions, particularly the nacelle acceleration along the rotor axis and/or along an axis perpendicular to the rotor axis, preferably a horizontal axis.

In a preferred embodiment, at least the above azimuth angle is used as an additional operation variable besides the one or more bending moments.

In another, particularly preferred embodiment, one or more predetermined actions are performed in case that the value of the tower clearance determined in step b) falls below a predetermined threshold. In other words, a comparison between the determined value of the tower clearance and a predetermined threshold is made where countermeasures are performed in case of low tower clearances.

The one or more predetermined actions can be defined differently. In one embodiment, the one or more predetermined actions comprise one or more actions resulting in a greater tower clearance, particularly a change of the pitch angle of the rotor blades and/or a reduction of the rotational speed of the rotor.

In another embodiment, the one or more predetermined actions comprise the generation of an alarm signal perceivable by surveillance staff so that the staff can initiate counter-actions in order to avoid a damage of the wind turbine. Additionally, or alternatively, the one or more predetermined actions may refer to a stop of the rotation of the rotor.

Different kinds of data driven models may be used in the monitoring method of the invention. In a preferred embodiment, the data driven model is a neural network, particularly a deep neural network having several hidden layers. Preferably, the neural network is a feed-forward neural network or a convolutional neural network or a recurrent neural network. E.g., the recurrent neural network may be an LSTM neural network (LSTM = Long Short-Term Memory). The above variants of neural networks are well-known for a skilled person and will not be described in detail herein.

In another embodiment of the invention, the data driven model is a classification and regression tree classifier (also named as CART), particularly a decision tree classifier, e.g. a random forest classifier.

Besides the above method, the invention refers to an apparatus for computer-implemented monitoring of a wind turbine comprising a tower which extends in a vertical direction and a nacelle which is arranged on top of the tower, where an electric generator is disposed within the nacelle and a rotor having several rotor blades is connected to the nacelle at a rotor hub. The rotor is configured to be rotated by wind around a rotor axis, where the mechanical energy of the rotation of the rotor is converted into electric energy by the electric generator. This apparatus is configured to perform the method according to the invention or one or more preferred embodiments of the method according to the invention.

Furthermore, the invention refers to a computer program product with a program code, which is stored on a non-transitory machine-readable carrier, for carrying out the method according to the invention or one or more preferred embodiments thereof when the program code is executed on a computer.

Furthermore, the invention refers to a computer program with a program code for carrying out a method according to the invention or one or more preferred embodiments thereof when the program code is executed on a computer.

In the following, an embodiment of the invention will be described in detail with respect to the accompanying drawings, wherein:
- Fig. 1 and Fig. 2: are schematic side views of a wind turbine illustrating the tower clearance occurring between the rotor and the tower of the turbine; and
- Fig. 3: is a flow diagram illustrating the steps performed in an embodiment of the invention.

The invention as described in the following provides a method for computer-implemented monitoring of a wind turbine in order to detect small tower clearances between the rotor and the tower of the turbine. As a consequence, damages of the turbine due to a collision between a rotor blade and the tower are avoided.

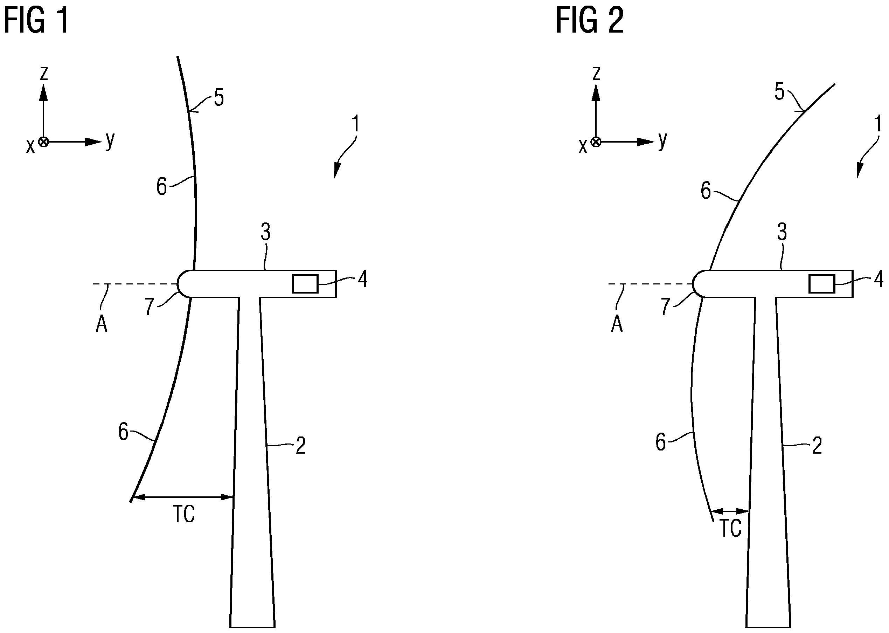

Fig. 1 shows an embodiment of a wind turbine for which the method as described in the following is implemented. The wind turbine is designated with reference numeral 1 and comprises a tower 2 extending in the vertical direction. A nacelle 3 is located on top of this tower. An electric generator 4 is disposed within the nacelle. One side of the nacelle is connected to a rotor 5 having rotor blades 6 fixed to a rotor hub 7. The hub 7 is attached to the nacelle 3. The rotor 5 rotates around a horizontal rotor axis A which extends along the longitudinal direction of the nacelle. Three rotor blades 6 are attached to the rotor hub 7. The blades are arranged with an angular distance of 120° in the rotor plane which is perpendicular to the rotor axis A.

The position of the wind turbine 1 with respect to the earth's surface is described by a Cartesian coordinate system comprising an x-axis, a y-axis and a z-axis. The x-axis and the y-axis extend in a horizontal plane whereas the z-axis extends in a vertical direction perpendicular to the earth's surface. The vertical direction corresponds to the extension of the tower 2. The nacelle 3 can be rotated around a longitudinal axis of the tower, i.e. an axis parallel to the z-axis of the Cartesian coordinate system. In case of wind, the nacelle is positioned such that the wind substantially falls in the direction of the rotor axis A on the rotor 5, resulting in a rotation of the rotor.

Wind acting on the rotor blades 6 causes bending moments occurring at the respective rotor blades. This will result in a variation of the so-called tower clearance between the rotor 5 and the tower 2. In Fig. 1 and Fig. 2, this tower clearance is indicated by reference numerals TC. The tower clearance refers to the shortest distance between the tip of a rotor blade when passing its lowermost position and the surface of the tower.

Fig. 1 shows a scenario where no wind is acting on the rotor blades 6 of the rotor 5. Without wind, a relatively big tower clearance TC occurs between the rotor 5 and the tower 2. Fig. 2 shows the same wind turbine as Fig. 1 with the only difference that high wind is acting on the wind turbine. Evidently, this will result in a bending moment on the rotor blades 6 so that the rotor blades are bent towards the y-axis corresponding to the wind direction. This will reduce the tower clearance TC. In case of very strong winds, the tower clearance may become zero resulting in a collision between the rotor blades and the tower causing damages on the wind turbine.

In order to avoid such damages, the turbine 1 is monitored by the aid of a neural network in order to detect small tower clearances. The monitoring method is implemented in a controller (not shown) disposed within the wind turbine which can initiate countermeasures in case of small tower clearances. Contrary to methods as disclosed in the prior art, the tower clearance is not measured directly but by a prediction performed by a corresponding neural network.

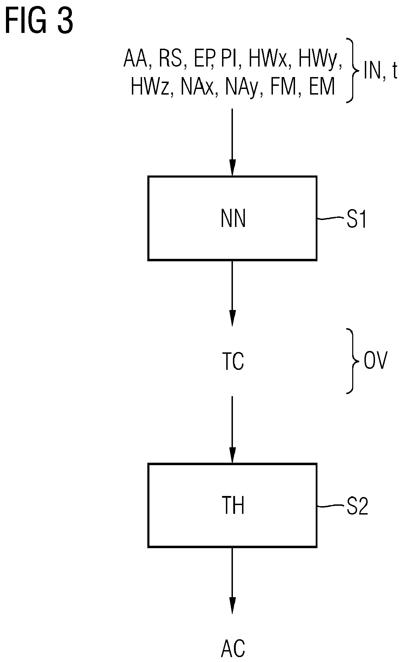

Fig. 3 shows a flow diagram illustrating a monitoring method according to an embodiment of the invention which is used for the wind turbine as shown in Fig. 1 and Fig. 2. As already mentioned, this method uses a neural network designated as NN in Fig. 3. The neural network is trained by training data where each training data set refers to values of a plurality of sensors installed in the wind turbine 1 forming input data as well as to a value of the tower clearance of a specific rotor blade as an output occurring for the input data of the training data set.

In the method described herein, the training data are generated by numerical simulations which are performed by the well-known software BHawC which is an aeroelastic code intended for calculating wind turbine responses. This software simulates the wind turbine with all its components, including its sensors, for a range of environmental conditions. The software BHawC provides the tower clearance directly. Instead, the blade tip deflections provided by the software BHawC or by another aerolastic code may be used in order to derive the tower clearance therefrom.

In the embodiment described herein, the neural network NN is trained by training data comprising the tower clearance TC. Nevertheless, in an alternative embodiment, the neural network may also be learned by training data where the output refers to the above described blade tip deflections. In this case, the tower clearance is calculated afterwards from the output generated by the trained neural network NN.

In a preferred embodiment of the invention, the following sensor data are used as input data within the corresponding training data sets:
- the azimuth angle AA describing the angular position of the specific rotor blade around the rotor axis A;
- the rotational speed RS of the rotor 5;
- the electric power EP produced by the wind turbine 1;
- the pitch angle PI of the specific rotor blade describing the angle in which the specific rotor blade is attached to the rotor hub 7;
- the wind speed HWx in the direction of the x-axis, the wind speed HWy in the direction of the y-axis and the wind speed HWz in the direction of the z-axis, where said wind speeds are the speeds occurring at the rotor hub 7;
- the acceleration NAx of the nacelle 3 in the direction of the x-axis and the acceleration NAy of the nacelle 3 in the direction of the y-axis;
- the flapwise bending moment FW of the specific rotor blade at its root attached to the rotor hub 7 and the edgewise bending moment EM of the specific rotor blade at its root attached to the rotor hub 7.

As mentioned above, the output data of a respective training data set refers to the tower clearance TC of the specific rotor blade when its tip is in its lowermost position.

The neural network NN indicated in Fig. 3 is trained beforehand by using the above training data sets. In a preferred embodiment, a deep neural network is used. This neural network comprises more than one hidden layer between its input layer and its output layer. E.g., a feed-forward network or a recurrent neural network may be used in the method of the invention. However, any other data driven model learned by machine learning may be implemented in the method of the invention, e.g. a decision tree classifier trained by corresponding training data.

The trained neural network NN is implemented in the controller of the wind turbine. As indicated in Fig. 3, the trained neural network NN receives during the operation of the wind turbine input data IN at corresponding operation time points t. The input data are measured values of the above-mentioned quantities AA, RS, EP, PI, HWx, HWy, HWz, NAx, NAy, FM and EM. In step S1 indicated in Fig. 3, the trained neural network NN predicts from those values the output variable OV which is the tower clearance TC.

In a subsequent step S2, the predicted value of the tower clearance TC at the corresponding operation time point t is compared with a threshold TH. In case that the tower clearance falls below the threshold, there is the risk of collisions between the rotor blades and the tower. Hence, in case that the tower clearance is below the threshold TH, one or more predetermined actions AC are initiated by the controller of the wind turbine 1.

In a particularly preferred embodiment, the predetermined actions refer to a reduction of the rotational speed of the rotor 5 of the turbine 1 and/or a suitable change of the pitch angle of all rotor blades 6. Those measures have the consequence of a greater tower clearance TC reducing the risk that rotor blades 6 collide with the tower 2.

Additionally, or alternatively, an alarm signal may also be generated in case that the tower clearance TC falls below the threshold TH. This alarm signal is transmitted to a control station so that the staff in control station is informed about the risk of a collision between the rotor blades and the tower. Thereafter, the staff may initiate appropriate countermeasures in order to lower the risk of a collision between the rotor blades and the tower. In another embodiment, a predetermined action may also refer to an emergency stop, i.e. an immediate stop of the rotation of the rotor. Preferably, this emergency stop will be initiated in case of very low tower clearances predicted by the trained neural network NN of Fig. 3.

In another embodiment of the invention, only a part of the input data IN indicated in Fig. 3 are used for training the neural network and performing predictions by the trained neural network. In this respect, the inventors found out that only using the azimuth angle AA, the flapwise bending moment FM and the edgewise bending moment EM as the input data will result in reasonable predictions with less computational effort in comparison to the use of all input data indicated in Fig. 3.

The method as described in the foregoing was tested by the inventors based on a neural network in the form of a feed-forward network having two hidden layers, each layer comprising fifty nodes. Inter alia, the neural network was learned with all the input data indicated in Fig. 3 and also with only the input data referring to the azimuth angle and the flapwise and edgewise bending moments. The inventors could show that quite accurate predictions of the tower clearance could be achieved. The coefficient of determination R² which is a well-known quantity was calculated for predictions of the trained neural networks. Coefficients in the range between 0.97 and 0.99 could be achieved.

The invention as described in the foregoing has several advantages. Particularly, the tower clearance of a wind turbine can be monitored in an easy and efficient way without installing sensors at the tip of the rotor blades. This is achieved by the aid of a neural network predicting the tower clearance based on other sensor data of the wind turbine. To do so, the neural network is trained by training data. The training data can be simulated data, e.g. taken from the well-known software BHawC. Nevertheless, the training data may also be extracted from real measurements of a corresponding wind turbine.

## Claims

1. A method for computer-implemented monitoring of a wind turbine (1) comprising a tower (2) which extends in a vertical direction and a nacelle (3) which is arranged on top of the tower (2), where an electric generator (4) is disposed within the nacelle (3) and a rotor (5) having several rotor blades (6) is connected to the nacelle (3) at a rotor hub (7), the rotor (5) being configured to be rotated by wind around a rotor axis (A), where the mechanical energy of the rotation of the rotor (5) is converted into electric energy by the electric generator (4), where the method comprises the following steps which are carried out for a corresponding operation time point (t) of a number of operation time points of the wind turbine (1):
a) acquiring respective values of one or more operation variables (AA, RS, ..., EM) of the wind turbine (1) at the corresponding operation time point (t) based on sensor data recorded for the wind turbine (1);
b) determining the value of a tower clearance (TC) resulting from the acquired value or values of the one or more operation variables (AA, RS, ..., EM) with the aid of a trained data driven model (NN), where the value of an output variable (OV) which is the tower clearance (TC) or a variable correlated with the tower clearance (TC) is predicted by feeding the acquired value of each operation variable (AA, RS, ..., EM) as a digital input (IN) to the trained data driven model (NN) which outputs the predicted value of the output variable (OV) as a digital output, where the data driven model (NN) is trained by training data sets, each comprising a value of the output variable (OV) for values of the one or more operation variables (AA, RS, ..., EM), the tower clearance (TC) being the shortest distance between the tower (2) and the tip of a specific rotor blade (6) from said several rotor blades (6) when the specific rotor blade (6) is in its lowermost position in which it points downward in the vertical direction.

2. The method according to claim 1, wherein the output variable (OV) is the blade tip deflection of the specific rotor blade (6) to the tower (2) at the corresponding operation time point (t), where the tower clearance (TC) is derived in step b) from the blade tip deflection.

3. The method according to claim 1 or 2, wherein the one or more operation variables (AA, RS, ..., EM) include one or more bending moments of the specific rotor blade (6) of the rotor (5) .

4. The method according to claim 3, wherein the one or more bending moments include a flapwise bending moment (FM) of the specific rotor blade (6) at its root attached to the rotor hub (7) or at a predetermined distance from its root and/or an edgewise bending moment (FM) of the specific rotor blade (6) at its root attached to the rotor hub (7) or at a predetermined distance from its root.

5. The method according to claim 3 or 4, wherein the one or more operation variables (AA, RS, ..., EM) additionally include one or more of the following variables:
- the azimuth angle (AA) describing the angular position of the specific rotor blade (6) around the rotor axis (A);
- the rotational speed (RS) of the rotor (5);
- the electric power (EP) produced by the wind turbine (1);
- the pitch angle (PI) of the specific rotor blade (6) describing the angle in which the specific rotor blade (6) is attached to the rotor hub (7);
- the wind speed (HWx, HWy, HWz) at the rotor hub (7) in one or more directions, particularly the wind speed (HWy) along the rotor axis (A) and/or the wind speed along at least one axis (HWx, HWz) perpendicular to the rotor axis (A) ;
- the nacelle acceleration (NAx, NAy) in one or more directions, particularly the nacelle acceleration (NAx, NAy) along the rotor axis (A) and/or along an axis perpendicular to the rotor axis (A), preferably a horizontal axis (x).

6. The method according to one of the preceding claims, wherein one or more predetermined actions (AC) are performed, in case that the value of the tower clearance (TC) determined in step b) falls below a predetermined threshold (TH).

7. The method according to claim 6, wherein the one or more predetermined actions (AC) comprise one or more actions resulting in a greater tower clearance (TC), particularly a change of the pitch angel of the rotor blades (6) and/or a reduction of the rotational speed of the rotor (5).

8. The method according to claim 6 or 7, wherein the one or more predetermined actions (AC) comprise the generation of an alarm signal perceivable by surveillance staff and/or the stop of the rotation of the rotor (5).

9. The method according to one of the preceding claims, wherein the data driven model (NN) is a neural network, particularly a deep neural network.

10. The method according to claim 9, wherein the neural network is a feed-forward neural network or a convolutional neural network or a recurrent neural network, particularly an LSTM neural network.

11. The method according to one of claims 1 to 8, wherein the data driven model (NN) is a classification and regression tree classifier, particularly a decision tree classifier.

12. An apparatus for computer-implemented monitoring of a wind turbine (1) comprising a tower (2) which extends in a vertical direction and a nacelle (3) which is arranged on top of the tower (2), where an electric generator (4) is disposed within the nacelle (3) and a rotor (5) having several rotor blades (6) is connected to the nacelle (3) at a rotor hub (7), the rotor (5) being configured to be rotated by wind around a rotor axis (A), where the mechanical energy of the rotation of the rotor (5) is converted into electric energy by the electric generator (4), where the apparatus is configured to perform a method comprising the following steps which are carried out at a corresponding operation time point (t) of a number of operation time points of the wind turbine (1):
a) acquiring respective values of one or more operation variables (AA, RS, ..., EM) of the wind turbine (1) at the corresponding operation time point (t) based on sensor data recorded for the wind turbine (1);
b) determining the value of a tower clearance (TC) resulting from the acquired value or values of the one or more operation variables (AA, RS, ..., EM) with the aid of a trained data driven model (NN), where the value of an output variable (OV) which is the tower clearance (TC) or a variable correlated with the tower clearance (TC) is predicted by feeding the acquired value of each operation variable (AA, RS, ..., EM) as a digital input (IN) to the trained data driven model (NN) which outputs the predicted value of the output variable (OV) as a digital output, where the data driven model (NN) is trained by training data sets, each comprising a value of the output variable (OV) for values of the one or more operation variables (AA, RS, ..., EM), the tower clearance (TC) being the shortest distance between the tower (2) and the tip of a specific rotor blade (6) from said several rotor blades (6) when the specific rotor blade (6) is in its lowermost position in which it points downward in the vertical direction.

13. The apparatus according to claim 12, wherein the apparatus is configured to perform a method according to one of claims 2 to 11.

14. A computer program product with program code, which is stored on a non-transitory machine-readable carrier, for carrying out a method according to one of claims 1 to 11 when the program code is executed on a computer.

15. A computer program with program code for carrying out a method according to one of claims 1 to 11 when the program code is executed on a computer.
